# EUROPEAN PATENT APPLICATION

(11) **EP 2 112 844 A2**
(43) Date of publication of application: **28.10.2009**
(21) Application number: 08170622.8
(22) Date of filing: 03.12.2008
(51) Int. Cl.: H04W 12/08, H04L 29/06

(54) **Methods and apparatus for setting up wireless LAN**

(30) Priority: 25.04.2008 KR 20080038895
(71) Applicant: Samsung Electronics Co., Ltd., Suwon-si, Gyeonggi-do 442-742 (KR)
(72) Inventor: Jin, Ho, Gyeonggi-do (KR); Sohn, Young-Chul, Seoul (KR)
(74) Representative: Fearnside, Andrew Simon

(57) **Abstract**

Wireless local area network (LAN) set up methods and apparatus by which a client apparatus not having a character input function may, desirably, easily provide wireless LAN setup. The wireless LAN set up method may include the operations of scanning associable wireless LAN devices so as to search for information about wireless LAN devices that support wireless security setup; and providing user interface information associated with wireless LAN setup of the wireless LAN devices according to found information about the wireless LAN devices that support the wireless security setup.

## Description

### CROSS-REFERENCE TO RELATED PATENT APPLICATION

This application claims the benefit of Korean Patent Application No. 10-2008-0038895, filed on April 25, 2008, in the Korean Intellectual Property Office, the disclosure of which is incorporated herein in its entirety by reference.

### BACKGROUND OF THE INVENTION

### 1. Field of the Invention

Methods and apparatuses consistent with the present invention relate to setting up a wireless local area network (LAN), and more particularly though not exclusively, to a wireless LAN set up method and apparatus by which a client apparatus having no character input devices may, most desirably, easily provide a wireless LAN setup.

### 2. Description of the Related Art

Generally, a wireless LAN comprises transmitting or receiving data through the air according to wireless frequency technology without a cable connection. Current wireless LANs generally follow the IEEE 802.11 standard.

Typically, modes for establishing a wireless network are classified into an infra mode, i.e., an infrastructure mode, in which access points (APs) exist, and an ad-hoc mode in which wireless LANs communicate with each other in specific places.

A wireless LAN system may include a Wireless Fidelity (WiFi) terminal and an AP.

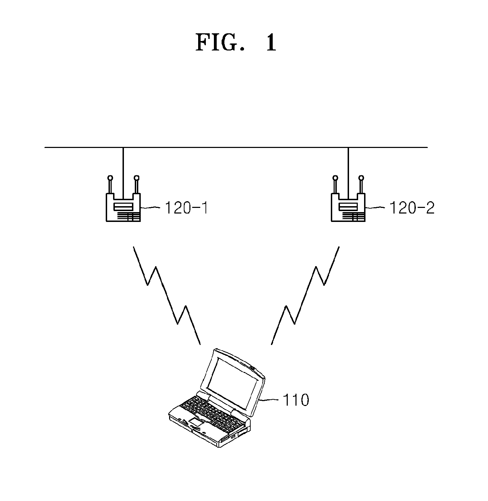

FIG. 1 is a conceptual diagram illustrating a process in which a conventional wireless LAN terminal 110 is connected to APs 120-1 and 120-2.

First, the conventional wireless LAN terminal 110 sends a scan request signal to the APs 120-1 and 120-2 when it desires to associate with the APs 120-1 and 120-2.

In response to the scan request signal, the conventional wireless LAN terminal 110 receives scan response signals from the APs 120-1 and 120-2.

The conventional wireless LAN terminal 110 associates with a desired AP from among the APs 120-1 and 120-2, which have provided the scan response signals.

At this time, the conventional wireless LAN terminal 110 may need a character input action in a scanning mode, a joining mode, or an ad-hoc mode. In other words, when the APs allow only communications with apparatuses that have associated with the APs through SSIDs, the conventional wireless LAN terminal 110 should input SSIDs and search the APs. SSIDs are 32-byte long identifiers attached to the headers of packets transmitted via a wireless LAN, and distinguish wireless networks.

When associating with an AP in which security has been set, the conventional wireless LAN terminal 110 should send a wireless security key (or a password) set in the AP to the AP in order to attempt to associate with the AP.

In addition, the conventional wireless LAN terminal 110 should generate an SSID in order to establish an ad-hoc network.

However, it is generally difficult for client apparatuses, such as TVs, cameras, mp3 players, and printers, to input a character string such as an SSID for wireless LAN establishment or a security key.

Thus, client apparatuses that do not support a character input function require a solution for wireless LAN establishment.

### SUMMARY OF THE INVENTION

According to the present invention there is provided an apparatus and method as set forth in the appended claims. Other features of the invention will be apparent from the dependent claims, and the description which follows.

The present invention , most desirably, may provide a wireless local area network (LAN) setting method and apparatus by which a client apparatus having no character input devices may provide to users an improved user interface and solution for enabling wireless LAN association.

According to an aspect of the present invention, there is provided a wireless LAN setting method comprising: scanning associable wireless LAN devices so as to search for information about wireless LAN devices that support wireless security setup; and providing user interface information (e.g. associated with wireless LAN setup of the wireless LAN devices) according to found information about the wireless LAN devices that support the wireless security setup.

According to another aspect of the present invention, there is provided a wireless LAN setting method comprising: generating service identifier information by using a random number (optionally, and/or a random text) at a request for an ad-hoc mode; scanning associable wireless LAN devices and determining whether the service identifier information is a duplicate; and performing communications in the ad-hoc mode when the service identifier information is not a duplicate.

According to another aspect of the present invention, there is provided a wireless LAN setting apparatus comprising: a wireless LAN control unit arranged to search, when wireless LAN setup (e.g. security setup) starts, for wireless LAN devices that support wireless security setup, to generate a wireless LAN setup menu for supporting the wireless security setup, to extract a list of wireless LAN devices in which a security key has not been set when wireless LAN devices in which a security key has been set do not exist (e.g. are not found), and to connect a wireless LAN terminal with a wireless LAN device when the wireless LAN device is selected from the wireless LAN setup menu; and a display unit arranged to display the wireless LAN setup menu and the generated wireless LAN device list which have been generated by the wireless LAN control unit.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a conceptual diagram illustrating a process in which a conventional wireless local area network (LAN) terminal may be connected to access points (APs);

FIG. 2 illustrates a wireless LAN system according to an embodiment of the present invention;

FIG. 3 is a block diagram of a structure of a wireless LAN terminal of the wireless LAN system illustrated in FIG. 2;

FIG. 4 is a flowchart illustrating a wireless LAN setup method according to an embodiment of the present invention;

FIG. 5 illustrates formats of a beacon message and a probe request signal illustrated in FIG. 4;

FIG. 6 is a flowchart of a method of making a list of wireless LAN networks in which securities have not been set, according to an embodiment of the present invention; and

FIG. 7 is a flowchart of a method of setting up a network in an ad-hoc mode, according to an embodiment of the present invention.

### DETAILED DESCRIPTION OF THE INVENTION

The present invention will now be described more fully with reference to the accompanying drawings, in which exemplary embodiments of the invention are shown.

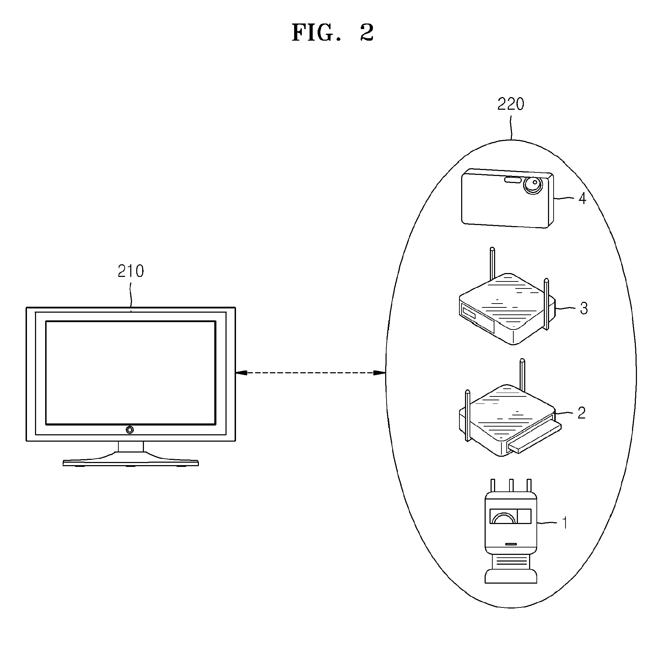

FIG. 2 illustrates a wireless LAN system according to an embodiment of the present invention. Referring to FIG. 2, the wireless LAN system includes a wireless LAN terminal 210 and an access point (AP) network 220.

The wireless LAN terminal 210, which is a client apparatus such as a TV, a camera, an MP3 player, or a printer, has a structure which cannot support a character input function. The wireless LAN terminal 210 communicates with another wireless LAN terminal 220:4 via APs 220:1, 220:2, and 220:3 in an infra mode. Alternatively, the wireless LAN terminal 210 communicates directly with the wireless LAN terminal 220:4 instead of via the APs_220:1, 220:2, and 220:3 in an ad-hoc mode.

In particular, the wireless LAN terminal 210 searches only APs which support a WiFi Protected Setup (WPS), provides improved user interface information for use in supporting the WPS, and displays on a screen a list of service set identifiers (SSIDs) of APs with which the wireless LAN terminal 210 can associate. In addition, the wireless LAN terminal 210 automatically generates SSIDs when an ad-hoc mode is requested, and thus establishes an ad-hoc network without character input actions.

The WPS is an authentication program that uses a standardized method in order to allow users to easily and quickly set encryption security on network WiFi devices.

The WPS supports security setup, and supports security setup for apparatuses incapable of character input actions. WPS modes are classified into a push button configuration (PBC) mode, a personal identification number (PIN) mode, a universal serial bus (USB) mode, and a near field communication (NFC) mode.

For example, in a method of automatically setting up a wireless LAN by using a PBC mode of the WPS, first, a WPS PBC button of one of an AP and a wireless LAN terminal is operated. Then, a WPS PBC button of the other device is depressed within 2 minutes from when the WPS PBC button was operated. If WPS PBC actions of two or more APs are performed simultaneously, networking between apparatuses cannot be performed.

Accordingly, the WPS PBC mode allows apparatuses to establish a wireless network without needing to input SSIDs and security keys.

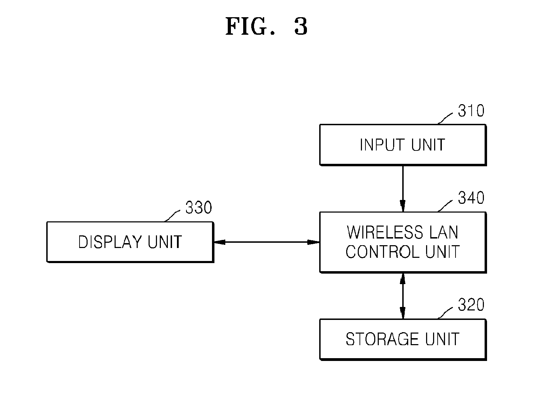

FIG. 3 is a block diagram of a structure of the wireless LAN terminal 210 illustrated in FIG. 2. Referring to FIG. 3, the wireless LAN terminal 210 includes an input unit 310, a storage unit 320, a display unit 330, and a wireless LAN control unit 340.

The input unit 310 is a key pad, a touch screen, or the like, and includes a plurality of number/character input keys, a function key for interfacing with users, a call key, and other keys. In particular, the input unit 310 selects APs with which the wireless LAN terminal 210 can associate, and also selects a security setup that supports the WPS PCB mode, by using a WPS PBC button.

The storage unit 320 is a Read Only Memory (ROM), a voice memory, or the like for storing a plurality of programs and data. In particular, the storage unit 320 stores information (for example, SSIDs) about APs that are found by the wireless LAN control unit 340.

The display unit 330 displays a WPS menu that is used to associate the wireless LAN terminal with a WPS network, which is generated by the wireless LAN control unit 340.

When the input unit 310 starts a security setup process by operating a specific key, the wireless LAN control unit 340 searches for APs that support the WPS, and provides improved user interface information for supporting the WPS. The wireless LAN control unit 340 also provides a list of SSIDs of the APs with which the wireless LAN terminal 210 can associate. The user interface information is used to interface between a user and the wireless LAN control unit 340 so as to edit the WPS menu and AP association information. In addition, at the request of the input unit 310 for an ad-hoc mode, the wireless LAN control unit 340 automatically generates SSIDs and establishes an ad-hoc network without character input actions.

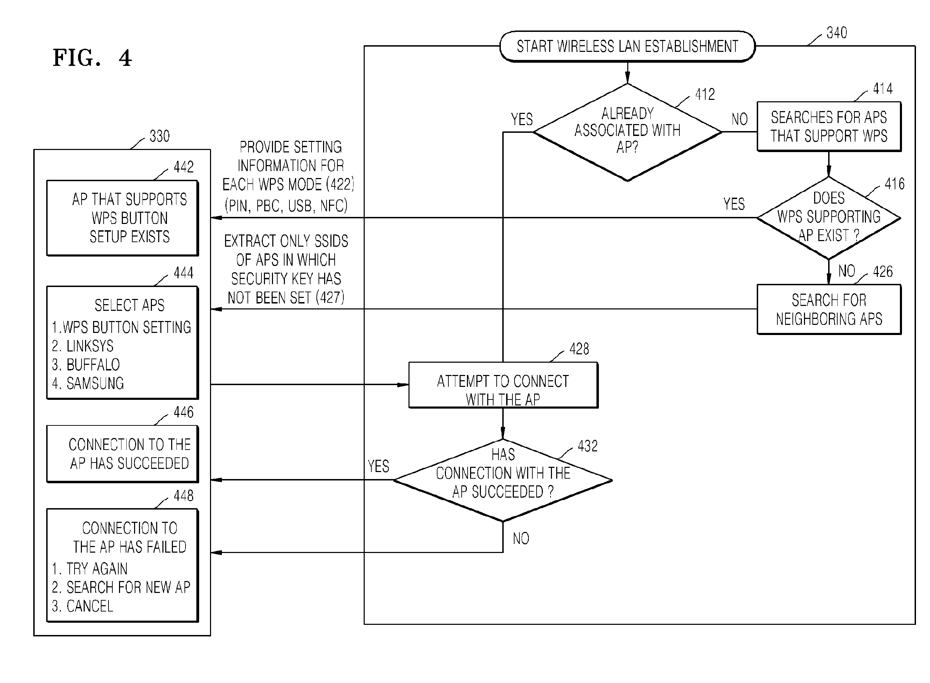

FIG. 4 is a flowchart illustrating a wireless LAN set up method according to an embodiment of the present invention.

In operation 412, when wireless LAN establishment is started by a key input from a user, the wireless LAN control unit 340 determines whether the wireless LAN terminal is already a part of a wireless LAN and already associated with an AP of that wireless LAN.

In operation 428, if the wireless LAN terminal is already associated with an AP, the wireless LAN control unit 340 attempts to connect with the AP. Then, in operation 432, it is determined whether the connection with the AP has succeeded.

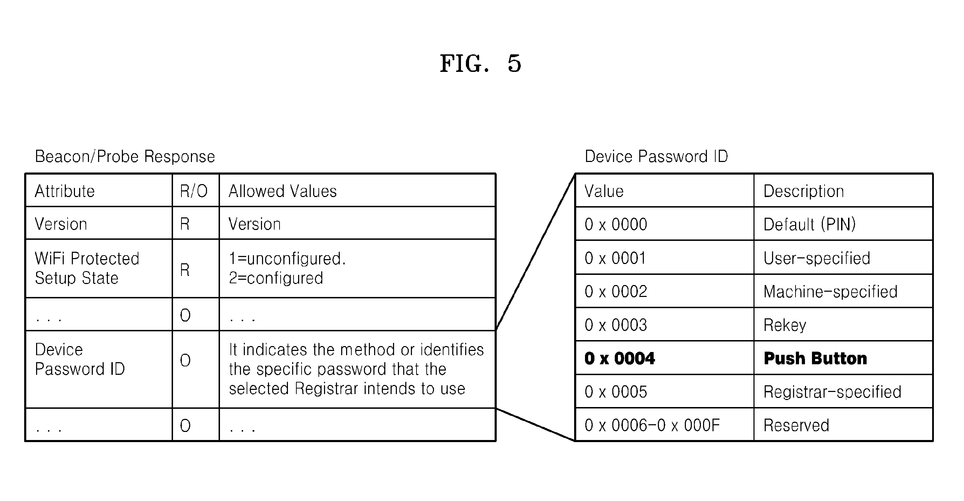

On the other hand, if the wireless terminal is not part of a wireless LAN and is not associated with an AP, the wireless LAN control unit 340 searches for APs that support the WPS, in operation 414. For example, the wireless LAN control unit 340 starts a scan mode so as to receive beacon messages from a plurality of APs. The wireless LAN control unit 340 sends probe request signals to APs with which the wireless LAN terminal 210 can associate. Then, the wireless LAN control unit 340 receives probe response signals from the associable APs. Next, the wireless LAN control unit 340 parses the beacon messages and the probe response signals so as to search for WPS states and device password IDs of the associable APs. As illustrated in FIG. 5, each of the beacon messages/probe response signals includes information about attributes of each of the APs. The wireless LAN control unit 340 generates a network information management table in which the attribute information about the APs are written. The network information management table includes information that indicates the existence or non-existence of SSIDs, security keys, and WPSs of APs. For example, as illustrated in FIG. 5, the beacon message/probe response signal in a WPS PBC mode includes a WPS state set as "2" and a device password ID set as "0x0004".

Then, in operation 416, the wireless LAN control unit 340 determines whether an AP that supports WPS exists, by using information (for example, the attributes of APs) extracted from the beacon messages and the probe response signals.

Next, in operation 422, if an AP that supports the WPS exists, the wireless LAN control unit 340 performs WPS wireless establishment and provides set up information for each WPS mode as a component of a user interface to the display unit 330. The set up information for each WPS mode may be PIN, PBC, USB, NFC, etc. At this time, only when an AP that supports the WPS exists, does the wireless LAN control unit 340 provide a WPS menu that allows users to associate with a network to the display unit 330. For example, when a found AP supports the PIN mode of the WPS, the wireless LAN control unit 340 provides interface information "Please, input your PIN information through a Registrar" to the display unit 330. On the other hand, when the found AP supports the PBC mode of the WPS, the wireless LAN control unit 340 provides interface information "Please, press the WPS button of the AP and then press the WPS button of your camera/TV" to the display unit 330.

Then, in operation 442, the display unit 330 displays the set up information for each WPS mode, which has been received from the wireless LAN control unit 340, in the form of a menu. For example, the display unit 330 displays a sentence "An AP that supports WPS button setup exists".

On the other hand, when the AP that supports the WPS does not exist, the wireless LAN control unit 340 searches for neighboring APs and performs general wireless setup, in operation 426. In operation 427, the wireless LAN control unit 340 extracts only SSIDs of APs in which a security key has not been set, from the AP attribute information. The wireless LAN control unit 340 provides a WPS menu only when the AP that supports the WPS exists. Accordingly, in an environment where character input is not performed, wireless LAN association of a wireless LAN terminal with APs in which security has been set is prevented because security key input is impossible.

Thereafter, in operation 444, the display unit 330 displays an associable AP selection/association menu extracted by the wireless LAN control unit 340. For example, the display unit 330 displays an AP selection menu "Select APs. 1. WPS button set up, 2. Linksys, 3. Buffalo, 4. Samsung".

Then, when a user selects one of the APs displayed on the display unit 330 by touching or operating a key, an AP selection signal representing the AP selection is provided to the wireless LAN control unit 340.

Then, in operation 428, the wireless LAN control unit 340 attempts a connection to the AP selected by the user. For example, when a user selects an AP that supports WPS PBC mode, which is displayed on the display unit 330, a wireless security set up is automatically performed in the PBC mode of the WPS.

Then, in operation 432, the wireless LAN control unit 340 determines whether the connection to the AP has succeeded. When the connection to the AP has succeeded, the wireless LAN control unit 340 provides an AP connection message 446 to the display unit 330. On the other hand, when the connection to the AP has failed, the wireless LAN control unit 340 provides an AP connection failure message 448 to the display unit 330.

Thus, the display unit 330 displays the AP connection message 446 and the AP connection failure message 448 received from the wireless LAN control unit 340. For example, the display unit 330 displays an AP connection message "Connection to the AP has succeeded.", and displays an AP connection failure message "Connection to the AP has failed. 1. Try again 2. Search for new AP 3. Cancel".

As a result, a wireless LAN terminal allows users to easily use a WPS-supporting network by automatically providing users with information about setup modes of WPS-supporting APs with which the wireless LAN terminal can associate.

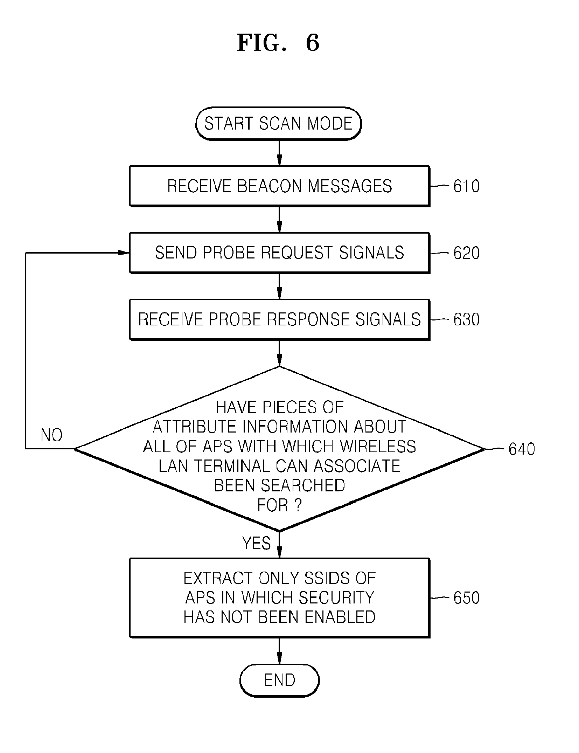

FIG. 6 is a flowchart of a method of making a list of wireless LAN networks which have not enabled a security protocol, according to an embodiment of the present invention. First, in operation 610, a wireless LAN terminal starts a scan mode and receives beacon messages from a plurality of APs.

Then, in operation 620, the wireless LAN terminal sends probe request signals to the plurality of APs and searches for a list of APs with which the wireless LAN terminal can associate.

Thereafter, in operation 630, the wireless LAN terminal receives probe response signals from the APs.

Then, the wireless LAN terminal detects AP attribute information from the beacon messages and the probe response signals of all APs (or channels) with which the wireless LAN terminal can associate. Then, in operation 640, the wireless LAN terminal determines whether pieces of attribute information about all of the APs with which the wireless LAN terminal can associate have been searched for.

If attribute information about all of the associable APs have not been searched for, the method goes back to operation 620. On the other hand, if attribute information about all of the associable APs has been searched for, only the SSIDs of APs which have not enabled a security protocol, are extracted from the attribute information about all of the associable APs, in operation S650.

As a result, the wireless LAN terminal can be prevented from associating with APs in which security has been enabled, by providing only the SSIDs of the APs not requiring security key input actions to users. Thus, the wireless LAN terminal can avoid a case where wireless LAN association is impossible.

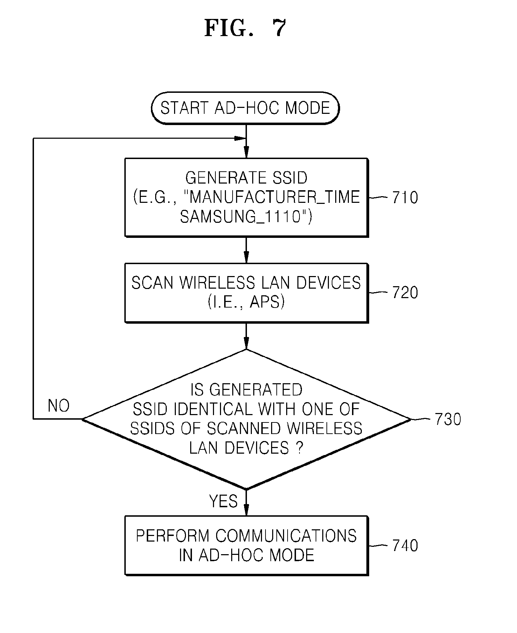

FIG. 7 is a flowchart of a method of setting up a network in an ad-hoc mode, according to an embodiment of the present invention.

First, in operation 710, when an ad-hoc mode starts, a wireless LAN terminal generates an SSID and a hash key by using a random number or a random text. For example, the SSID may be generated as "manufacturer_Time Samsung_1110" by using the random number.

Then, in operation 720, the wireless LAN terminal scans wireless LAN devices (i.e., APs) with which the wireless LAN terminal can associate.

In operation 730, the wireless LAN terminal scans the wireless LAN devices (or APs) with which the wireless LAN terminal can associate, in order to determine whether the generated SSID is a duplicate. In other words, if the generated SSID is identical with one of SSIDs of the scanned wireless LAN devices, operations 710 and 720 are performed again so as to generate an SSID not identical with the SSIDs of the scanned wireless LAN devices.

On the other hand, if the generated SSID is not identical with one of SSIDs of the scanned wireless LAN devices, the wireless LAN terminal performs communications in an ad-hoc mode.

As a result, the wireless LAN terminal can establish an ad-hoc network by automatically generating an SSID which is unique for an environment where a user cannot input characters.

According to the present invention, as described above, setting mode information about WPS supporting devices that can be associated with a wireless LAN terminal is automatically provided to users, and thus the users can easily use a WPS supporting network. In addition, the wireless LAN terminal can establish an ad-hoc network by automatically generating SSIDs in an environment where a user cannot input characters.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. In another exemplary embodiment, the computer readable recording medium may include carrier waves (such as data transmission through the Internet) and may also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless local area network (LAN) set up method comprising:
scanning associable wireless LAN devices to search for information about wireless LAN devices that support wireless security setups (414); and
providing user interface information according to found information about the wireless LAN devices that support the wireless security setups (442).

2. The wireless LAN set up method of claim 1 further comprising providing the information about the wireless LAN devices that support the wireless security setups and then scanning the information about the wireless LAN devices that support the wireless security setups, and providing a list of wireless LAN networks in which respective wireless securities have not been set (427).

3. The wireless LAN set up method of claim 2, wherein the providing of the list of the wireless LAN networks in which the respective wireless securities have not been set comprises:
searching for service set identifiers of associable wireless LAN devices in which respective wireless securities have not been set; and
providing information corresponding to the service set identifiers of the associable wireless LAN devices in which the respective wireless securities have not been set.

4. The wireless LAN set up method of any preceeding claim, wherein the information about the wireless LAN devices that support the wireless security setups comprises information about wireless LAN devices that support WiFi Protected Setup protocol.

5. The wireless LAN set up method of any preceeding claim, wherein the providing of the user interface information comprises providing a menu of wireless security setup information, the wireless security setup information including information on a type of supported WiFi Protected Setup (WPS) mode (444).

6. The wireless LAN set up method of any preceeding claim, wherein the user interface information related to the wireless security setups of the wireless LAN devices include information on a type of supported WiFi Protected Setup (WPS) mode.

7. The wireless LAN set up method of claim 6, wherein the wireless security setups include information on a WPS push button.

8. The wireless LAN set up method of any preceeding claim, further comprising, when a signal for selecting an access point (AP) according to the user interface information is received, connecting a wireless LAN terminal to a selected AP (446).

9. A wireless LAN set up method comprising:
generating service identifier information by using at least one of a random number and a random text at a request for an ad-hoc mode (710);
scanning associable wireless LAN devices and determining whether the service identifier information is a duplicate(720, 730); and
performing communications in the ad-hoc mode if the service identifier information is not the duplicate (740).

10. The wireless LAN set up method of claim 9, further comprising generating a hash key and including the hash key in the service identifier information.

11. The wireless LAN set up method of any of claims 9 to 10, wherein the service identifier information is generated using the random number.

12. The wireless LAN set up method of any of claims 9 to 11, wherein the determining whether the service identifier information is the duplicate comprises determining whether the generated service identifier information is identical with pieces of service identifier information of the scanned associable wireless LAN devices.

13. A wireless LAN set up apparatus comprising:
a wireless LAN control unit (340) arranged to search, when wireless security setup starts, for wireless LAN devices that support wireless security setups, to generate a wireless security setup menu displaying supported wireless security setups, to extract a list of wireless LAN devices in which a security key has not been set if wireless LAN devices in which a security key has been set do not exist, and to connect a wireless LAN terminal with a wireless LAN device if the wireless LAN device is selected from the wireless LAN setup menu; and
a display unit (330) arranged to display the wireless security setup menu and the extracted list of wireless LAN devices.

14. The wireless LAN set up apparatus of claim 13, wherein the wireless LAN control unit is arranged to establish, in response to a request for an ad-hoc mode, an ad-hoc network by automatically generating service identifier information without receiving input characters.

15. The wireless LAN set up apparatus of any of claims 13 to 14, wherein , the wireless LAN control unit is arranged to provide set up information for each WiFi Protected Setup (WPS) mode as a component of a user interface to the display unit, if a wireless LAN device that supports the wireless security setup is found to exist
